# EUROPÄISCHE PATENTANMELDUNG

(11) **EP 3 608 739 A1**
(43) Veröffentlichungstag der Anmeldung: **12.02.2020**
(21) Anmeldenummer: 19190827.6
(22) Anmeldetag: 08.08.2019
(51) Int. Cl.: G05B 19/4097

(54) **QUALITÄTSOPTIMIERTER ZUSCHNITT VON BANDMATERIAL**

(30) Priorität: 08.08.2018 DE 102018213280
(71) Anmelder: SMS Group GmbH, 40237 Düsseldorf (DE)
(72) Erfinder: Klein, Carsten Andreas, 40237 Düsseldorf (DE)
(74) Vertreter: Klüppel, Walter

(57) **Zusammenfassung**

Planungseinrichtung (4), System und Verfahren zur Erstellung eines Schnittmusters (100), das zum Steuern einer Anlage (50) für den Zuschnitt eines Bandmaterials (B), vorzugsweise eines Metallbands, vorgesehen ist, wobei die Planungseinrichtung (4) eingerichtet ist, um Werkstückdaten, die eine oder mehrere Formen von aus dem Bandmaterial (B) herzustellenden Werkstücken (101) kennzeichnen, zu empfangen, Qualitätsdaten, welche die qualitative Beschaffenheit eines oder mehrerer Abschnitte des Bandmaterials (B) kennzeichnen, zu empfangen, eine Anordnung der Formen auf dem Bandmaterial (B) unter Berücksichtigung der Werkstückdaten und der Qualitätsdaten zu bestimmen und daraus ein Schnittmuster (100) zu erstellen.

## Beschreibung

### Technisches Gebiet

Die Erfindung betrifft eine Planungseinrichtung, ein System und ein Verfahren zur Erstellung eines Schnittmusters, das zum Steuern einer Anlage für den Zuschnitt eines Bandmaterials, vorzugsweise eines Metallbands, vorgesehen ist.

### Hintergrund der Erfindung

Viele Produkte und Bauteile werden hergestellt, indem ein Metallband erzeugt wird, Teile daraus ausgestanzt oder ausgeschnitten und durch einen nachfolgenden Umformprozess, etwa Tiefziehen, in die gewünschte Form gebracht werden.

Häufig finden die Herstellung des Metallbands und die Weiterverarbeitung an unterschiedlichen Orten statt und werden von unterschiedlichen Betrieben vorgenommen. Beispielsweise werden beim Hersteller des Metallbands Brammen, etwa im Anschluss an das Gießen, durch ein oder mehrere Walzgerüste gefahren. Die so hergestellten Metallbänder werden zu Coils aufgewickelt, und die Coils werden an weiterverarbeitende Betriebe, etwa der Automobilindustrie, geliefert.

Der Informationsaustausch zwischen den Unternehmen über den Produktzustand ist beschränkt. So beziehen die weiterverarbeitenden Betriebe beispielsweise Coils einer bestimmten Spezifikation, die vom Hersteller des Bandmaterials bestimmt wird. Allerdings kann es bei der Herstellung eines Metallbands zu lokalen Qualitätsunterschieden kommen: Materialeigenschaften oder das Erscheinungsbild können abschnittsweise schwanken, Oberflächendefekte, wie etwa Kratzer und Dellen, können auftreten usw.. Je nach Prozesskontrolle können derartige Qualitätsunterschiede schwerwiegender und häufiger oder auch unerheblicher und seltener sein. Üblicherweise nimmt der Hersteller des Metallbands mittels seines eigenen Qualitätswesens eine Bewertung des Bands vor.

Der weiterverarbeitende Betrieb bezieht das Metallband als Halbzeug basierend auf der Spezifikation des Bandherstellers. In den eigenen Anlagen des weiterverarbeitenden Betriebs werden aus dem Halbzeug ein oder mehrere Teile ausgestanzt oder ausgeschnitten und weiteren Bearbeitungsschritten, etwa Umformprozessen, unterzogen. Beim Ausstanzen/Ausschneiden der Teile aus dem Metallband entstehen Schnittreste, die in der Regel verschrottet werden.

Um das Bandmaterial effizient zu nutzen, kommen vermehrt Optimierungsprogramme zum Einsatz, die Schnittmuster auf eine Weise bestimmen, dass die ungenutzte Bandfläche möglichst minimiert wird. Etwaige Qualitätsunterschiede des Materials, insbesondere innerhalb eines Bands, werden bei der Optimierung des Schnittmusters nicht berücksichtigt. Die Qualitätskontrolle im weiterverarbeitenden Betrieb erfolgt zumeist nach dem Zuschnitt, und die als mangelhaft erkannten Teile werden zu einem späteren Zeitpunkt ausgeschleust.

### Darstellung der Erfindung

Eine Aufgabe der Erfindung besteht darin, die Materialnutzung und/oder die Qualität beim Ausschneiden von Werkstücken aus einem Bandmaterial, vorzugsweise einem Metallband, zu verbessern.

Gelöst wird die Aufgabe mit einer Planungseinrichtung mit den Merkmalen des Anspruchs 1, einem System mit den Merkmalen des Anspruchs 8, sowie einem Verfahren mit den Merkmalen des Anspruchs 10. Vorteilhafte Weiterbildungen folgen aus den Unteransprüchen, der folgenden Darstellung der Erfindung sowie der Beschreibung bevorzugter Ausführungsbeispiele.

Die erfindungsgemäße Planungseinrichtung dient zur Erstellung eines Schnittmusters, das zum Steuern einer Anlage für den Zuschnitt eines Bandmaterials, vorzugsweise eines Metallbands, vorgesehen ist. In anderen Worten, das Schnittmuster dient als Vorlage zur Konfektionierung des Bandmaterials. Die Planungseinrichtung ist eingerichtet, um Werkstückdaten zu empfangen, die eine oder mehrere Formen von aus dem Bandmaterial herzustellenden Werkstücken kennzeichnen. Die herzustellenden Werkstücke sind beispielsweise Blechteile, die als Halbzeuge aus dem Bandmaterial auszuschneiden sind. Vorzugsweise beschreibt die Form eines solchen Werkstücks dessen geometrische Beschaffenheit. Die Form kann die Endabmessung eines solchen Werkstücks oder eine endabmessungsnahe geometrische Beschaffenheit definieren. Die Planungseinrichtung ist ferner eingerichtet, um Qualitätsdaten zu empfangen, welche die qualitative Beschaffenheit eines oder mehrerer Abschnitte des Bandmaterials kennzeichnen. Die Qualitätsdaten kennzeichnen vorzugsweise zumindest eine Eigenschaft, wie etwa Oberflächendefekte (Kratzer, Dellen, Fremdmaterialien, Zunderreste, Walzfehler, abweichende Rauheit usw.) oder eine Materialeigenschaft (Zugfestigkeit, Streckgrenze, E-Modul, Bruchdehnung usw.). Die Planungseinrichtung ist ferner eingerichtet, um eine Anordnung der Formen auf dem Bandmaterial unter Berücksichtigung der Werkstückdaten und der Qualitätsdaten zu bestimmen und daraus ein Schnittmuster zu erstellen. In anderen Worten, Positionen und Ausrichtungen der Werkstückformen werden unter Berücksichtigung der globalen und/oder lokalen Bandqualität festgelegt, so dass die Werkstücke gemäß dem so erzeugten Schnittmuster von einer entsprechenden Anlage aus dem Bandmaterial ausschneidbar sind. Hierbei können identische oder unterschiedliche Werkstückformen auf dem Bandmaterial angeordnet werden.

Während defekte oder mangelhafte Werkstücke normalerweise erst nach dem Zuschnitt erkannt und aussortiert werden, werden Qualitätsmerkmale des Bandmaterials bereits bei der Ermittlung des Schnittmusters berücksichtigt. Auf diese Weise kann die Materialnutzung erhöht und die Ausbringung von Gutmaterial erhöht werden. Es fallen geringere Mengen an Schrott an. Zudem kann die Qualitätsprüfung nach dem Zuschnitt der Werkstücke ggf. entfallen oder zumindest vereinfacht werden.

Vorzugsweise umfasst die Bestimmung der Anordnung der auszuschneidenden Werkstücke bzw. deren Formen eine Optimierung der Positionen und/oder Ausrichtungen der Formen relativ zum Bandmaterial. Die Optimierung kann beispielsweise eine Minimierung des Verschnitts und/oder eine Maximierung der Anzahl der Formen pro Bandeinheit (beispielsweise Längeneinheit und/oder Breiteneinheit) umfassen. Ferner kann die Optimierung derart sein, dass Werkstücke unterschiedlicher Qualitätsanforderungen den lokalen Qualitätseigenschaften des Metallbands entsprechend auf dem Band angeordnet werden. Es sei darauf hingewiesen, dass mehrere zu optimierende Parameter kombiniert und ggf. gewichtet werden können. Durch eine Optimierung in Abhängigkeit sowohl der empfangenen Werkstückdaten als auch der Qualitätsdaten lässt sich der Produktionsprozess weiter verbessern. Zudem kann die Optimierung so durchgeführt werden, dass sie unmittelbar auf eine Änderung der Werkstückdaten, etwa bei einem Bestellungseingang, und/oder eine Änderung der Qualitätsdaten, etwa bei Abweichungen oder Störungen im Herstellungsprozess, reagiert.

Vorzugsweise werden bei der Bestimmung der Anordnung Abschnitte des Bandmaterials, deren Qualitätsdaten auf einen oder mehrere Mängel oder Defekte hinweisen, ausgespart. In anderen Worten, das Schnittmuster wird so generiert, dass an Stellen, die mangelhaften oder defekten Abschnitten des Bandmaterials entsprechen, keine Werkstücke ausgeschnitten werden, wenn das Schnittmuster für den Zuschnitt auf das Bandmaterial angewendet wird. Bei der Planung des Schnittmusters kann das Bandmaterial in unabhängige Teile zerlegt werden, wenn ganze Abschnitte unbrauchbar sind. Die Werkstücke werden auf diese Weise gewissermaßen um mangelhafte oder defekte Bereiche herum platziert.

Vorzugsweise umfassen Mängel oder Defekte Oberflächenfehler, etwa Kratzer und/oder Dellen und/oder Fremdmaterialien und/oder Zunderreste und/oder Walzfehler und/oder abweichende Rauheit, und/oder von einer Spezifikation abweichende Materialeigenschaften, etwa Zugfestigkeit und/oder Streckgrenze und/oder E-Modul und/oder Bruchdehnung und/oder R-Wert.

Vorzugsweise werden die Qualitätsdaten als Funktion von Bandkoordinaten, etwa in Längsrichtung und/oder Breitenrichtung des Bandmaterials, empfangen oder erstellt, wodurch lokale Qualitätsunterschiede, insbesondere Abweichungen von einer gewünschten Spezifikation, unmittelbar zur Geometrie des Bandmaterials in Beziehung stehen. Eine solche Repräsentation der Qualitätsdaten kann für eine visuelle Darstellung der Bandqualität genutzt werden und die Weiterverarbeitung zur Herstellung des Schnittmusters vereinfachen.

Vorzugsweise wird die Anordnung der Formen auf dem Bandmaterial ferner unter Berücksichtigung von Prozessdaten aus dem Herstellungsprozess des Bandmaterials bestimmt. Hierbei können die Prozessdaten etwa in die Erstellung der Qualitätsdaten einfließen. Auf diese Weise kann die qualitätsbezogene Optimierung des Schnittmusters weiter verbessert werden, insbesondere die Qualitätsermittlung des Bandmaterials zuverlässiger durchgeführt werden.

Gemäß der Erfindung wird zudem ein System zur Erstellung des Schnittmusters bereitgestellt, wobei das System aufweist: eine Sensorik, die zur Detektion mechanischer Eigenschaften des Bandmaterials und Bereitstellung der Detektionsdaten eingerichtet ist; eine elektronische Einrichtung, die eingerichtet ist, um aus den Detektionsdaten der Sensorik die Qualitätsdaten bereitzustellen; und eine Planungseinrichtung gemäß der obigen Beschreibung.

Die Sensorik kann hierbei beispielsweise ein Kamerasystem und/oder einen oder mehrere Detektoren zur Messung des Profils und/oder der Rauheit und/oder Streckgrenze und/oder Zugfestigkeit und/oder des E-Moduls aufweisen.

Gemäß der Erfindung wird zudem ein Verfahren zur Erstellung des Schnittmusters bereitgestellt, wobei das Verfahren aufweist: Empfangen von Werkstückdaten, die eine oder mehrere Formen von aus dem Bandmaterial herzustellenden Werkstücken kennzeichnen; Empfangen von Qualitätsdaten, welche die qualitative Beschaffenheit eines oder mehrerer Abschnitte des Bandmaterials kennzeichnen; Bestimmen einer Anordnung der Formen auf dem Bandmaterial unter Berücksichtigung der Werkstückdaten und der Qualitätsdaten und Erstellen eines Schnittmusters daraus.

Die Merkmale, technischen Wirkungen, Vorteile sowie Ausführungsbeispiele, die in Bezug auf die Planungseinrichtung beschrieben wurden, gelten analog für das System und das Verfahren.

Wenngleich die Erfindung besonders bevorzugt bei der Verarbeitung von Metallbändern zum Einsatz kommt, kann die Erfindung auch in anderen Industrieanlagen angewendet werden, in denen Bandmaterialien verarbeitet, insbesondere zugeschnitten werden.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale realisiert werden, insofern sich die Merkmale nicht widersprechen. Die folgende Beschreibung bevorzugter Ausführungsbeispiele erfolgt mit Bezug auf die begleitenden Zeichnungen.

### Kurze Beschreibung der Figuren

Die Figur 1 ist eine schematische Ansicht eines Walzwerks mit auslaufseitiger Sensorik und einer Planungseinrichtung zur Ermittlung eines Schnittmusters.
Die Figur 2 zeigt ein beispielhaftes Schnittmuster als Vorlage zur Konfektionierung des Metallbands.
Die Figur 3 ist eine schematische Seitenansicht, die den Grundaufbau einer beispielhaften Anlage für den Zuschnitt eines Metallbands zeigt.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den Figuren mit identischen Bezugszeichen versehen, und auf eine wiederholende Beschreibung dieser Elemente wird teilweise verzichtet, um Redundanzen zu vermeiden.

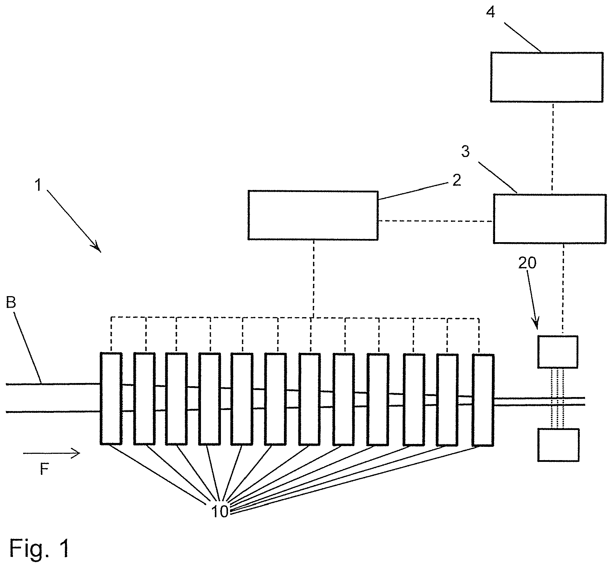

Die Figur 1 ist eine schematische Ansicht eines Walzwerks 1, als eine beispielhafte Anlage zur Herstellung eines Metallbands B. Dem Walzwerk 1 kann eine Stranggießanlage (nicht dargestellt) vorangestellt sein, die auf bekannte Weise aus einer Metallschmelze einen Strang in Brammenform herstellt, der im Anschluss daran vom Walzwerk 1 warm- und/oder kaltgewalzt wird. Das gewalzte Metallband B kann für den Transport zu einem weiterverarbeitenden Betrieb zu einem Coil aufgewickelt werden (in der Figur 1 nicht dargestellt).

Das Walzwerk 1 weist mehrere, hier beispielhaft zwölf, Walzgerüste 10 auf. Die Walzgerüste 10 sind vorzugsweise einzeln ansteuerbar. Insbesondere sind die Drehzahlen von Arbeitswalzen (in der Figur 1 nicht dargestellt) der Walzgerüste 10 vorzugsweise individuell einstellbar.

Die Ansteuerung der Walzgerüste 10 erfolgt über eine Steuereinrichtung 2, vorzugsweise computerbasiert. Die Steuereinrichtung 2 übernimmt ggf. die Ansteuerung weiterer Komponenten des Walzwerks 1. Es sei darauf hingewiesen, dass die Bezeichnung "Steuereinrichtung" sowohl zentrale als auch dezentrale Strukturen zur Steuerung des Walzwerks 1 umfasst. Die Steuereinrichtung 2 muss sich demnach nicht am "Ort" des Walzwerks 1 befinden oder Bestandteil desselben sein. Zudem können Steueraufgaben, Datenverarbeitungsschritte usw. auf verschiedene Recheneinrichtungen verteilt werden, die dann in ihrer Gesamtheit unter die Bezeichnung "Steuereinrichtung" fallen. Ferner kann die Kommunikation der Steuereinrichtung 2 mit den zu steuernden Komponenten sowohl physisch über Kabel als auch drahtlos erfolgen.

Zum Walzen eines Metallbands B läuft dieses in einer Förderrichtung F durch das Walzwerk 1. Vor dem Eintritt in das Walzwerk 1 weist das Metallband B eine einlaufseitige Dicke auf. Beim Austritt aus dem letzten Walzgerüst 10 weist das Metallband B eine reduzierte Wanddicke und/oder eine veränderte Oberflächenstruktur auf.

Die Qualität des auslaufseitigen Metallbands B wird mittels einer Sensorik 20 und einer elektronischen Einrichtung 3 ermittelt. Die Sensorik 20 liefert Messdaten, die zur Erstellung qualitätsrelevanter Informationen herangezogen werden. Zu diesem Zweck kann die Sensorik 20 zur Charakterisierung der Oberfläche(n) des Metallbands B eingerichtet sein, indem sie beispielsweise ein Kamerasystem und/oder Detektoren zur Profilmessung, Rauheit usw. aufweist. Die Sensorik 20 kann alternativ oder zusätzlich Sensoren zur Detektion mechanischer Eigenschaften des Metallbands B, beispielsweise Streckgrenze, Zugfestigkeit, E-Modul usw., aufweisen. Die Detektion bzw. Messung kann direkt und/oder indirekt, durch Kontakt und/oder kontaktlos, mechanisch, optisch, magnetisch, elektronisch usw. erfolgen.

Die von der Sensorik 20 ermittelten Daten werden an eine elektronische Einrichtung 3, die hierin auch als "Qualitätskartierung" bezeichnet ist, übertragen.

Die Qualitätskartierung 3 ist eingerichtet, um aus den von der Sensorik 20 empfangenen Daten Informationen über die globale Qualität des Metallbands B und/oder lokale Qualität von Abschnitten des Metallbands B zu ermitteln. Zu diesem Zweck kann die Qualitätskartierung 3 ggf. auf weitere Prozessdaten aus der Herstellung des Metallbands B zurückgreifen. Die ermittelten Informationen treffen Aussagen über die Qualität eines oder mehrerer Abschnitte oder Bereiche des Metallbands B. Die Qualitätsinformationen, auch als Qualitätsdaten bezeichnet, können als Funktion von Bandkoordinaten (etwa entlang der Längs- und/oder Breitenerstreckung) ermittelt werden. Es kann ein Plan erstellt werden, der auf einer internen Repräsentation des Metallbands B die unterschiedlichen Qualitätseigenschaften kennzeichnet. Im einfachsten Fall wird das Metallband entlang der Längserstreckung in Abschnitte unterteilt, denen jeweils ein Qualitätsmerkmal, etwa ein numerischer Wert, zugeordnet wird.

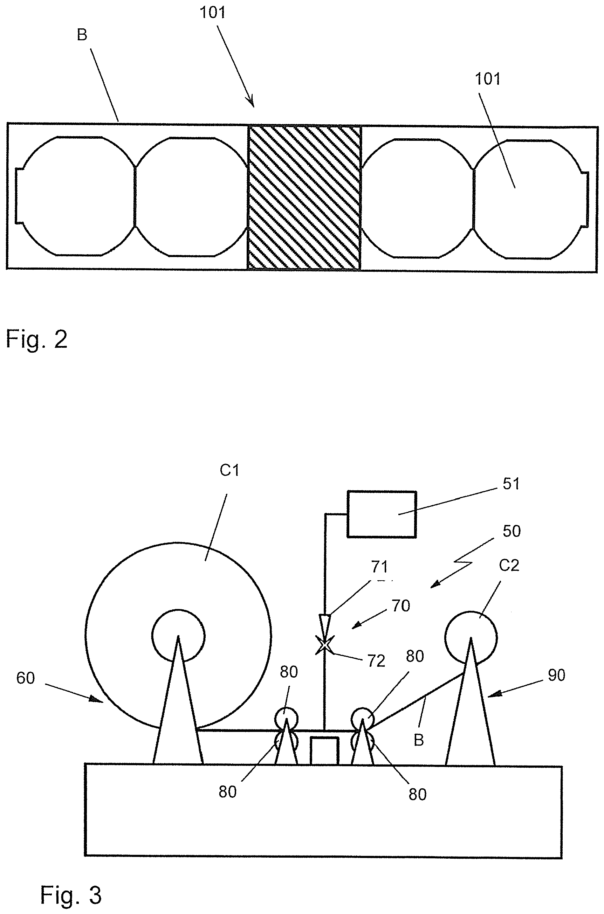

Die so ermittelten Qualitätsinformationen werden einer Planungseinrichtung 4 zur Erstellung eines Schnittmusters 100 bereitgestellt. Das Schnittmuster 100 ist eine Vorlage zur Konfektionierung des Metallbands B. Das Schnittmuster 100 kann von einer Anlage 50 gemäß der Figur 3 verarbeitet werden, um das Metallband B gemäß dem Schnittmuster 100 zuzuschneiden. Ein beispielhaftes Schnittmuster 100 ist in der Figur 2 dargestellt. Das Schnittmuster 100 dient in diesem Sinne als Grundlage zur Steuerung der Anlage 50 für den Zuschnitt des Metallbands B, vgl. Figur 3.

In der Planungseinrichtung 4 werden die Qualitätsinformationen und Werkstückdaten berücksichtigt, so dass die Werkstücke 101 bzw. deren Formen entsprechend auf dem Metallband B positioniert und ausgerichtet werden und/oder nur Werkstücke 101 im Schnittmuster 100 geplant werden, die mit der lokal vorliegenden Qualität auch herstellbar sind. Dies beinhaltet die Möglichkeit, dass bestimmte Abschnitte oder Bereiche des Metallbands B nicht verplant werden, wenn die dort lokal vorliegenden Mängel zu schwerwiegend sind, wie es in der Figur 2 beispielhaft durch einen schraffierten Bereiche dargestellt ist. Bei der Planung des Schnittmusters 100 kann das Metallband B in unabhängige Teile zerlegt werden, wenn ganze Abschnitte unbrauchbar sind. Ferner können bei der Planung des Schnittmusters 100 bestimmte Bereiche ausgespart werden, etwa wenn lokale Oberflächendefekte vorliegen. Oberflächendefekte können beispielsweise Kratzer, Dellen, Fremdmaterialien, Zunderreste, Walzfehler, abweichende Rauheit usw. sein. Bei den Defekten kann es sich auch um von einer Spezifikation abweichende Materialeigenschaften, wie etwa Zugfestigkeit, Streckgrenze, E-Modul, Bruchdehnung, R-Wert usw., handeln. Die Werkstücke 101 können um defekte Bereiche herum geplant werden. In diesem Fall kann die Flächennutzung der Planung geringer sein, als wenn keine Defekte oder qualitativ minderwertigen Abschnitte des Metallbands B berücksichtigt werden würden. Die Flächennutzung ist jedoch höher, als die hypothetische Flächennutzung, die sich ergäbe, wenn man ein Schnittmuster ohne Berücksichtigung der Qualitätsinformationen verwenden und minderwertige Werkstücke nach dem Ausschneiden aussortieren würde.

Die Figur 3 ist eine schematische Seitenansicht, die den Grundaufbau der Anlage 50 für den Zuschnitt des Metallbands B zeigt. Die Anlage 50 ist vorzugsweise eine Anlage oder ein Anlagenteil eines weiterverarbeitenden Betriebs. Die Anlage 50 kann aber auch ein zusätzliches Aggregat in einem Walzwerk oder einem nachgelagerten Servicecenter sein.

Die Anlage 50 weist im vorliegenden Ausführungsbeispiel eine Abwickelhaspel 60 auf, die ein Coil C1 aus dem zuvor aufgewickelten Metallband B aufnimmt und zum Abwickeln des Metallbands B eingerichtet ist. Die Anlage 50 weist ferner eine Schneideinrichtung 70 sowie Richtrollen 80 auf, die das Metallband B so ausrichten und transportieren, dass es von der Schneideinrichtung 70 zugeschnitten werden kann. Zu diesem Zweck weist die Schneideinrichtung 70 zumindest einen Schneidkopf 71 auf, der entlang einer oder mehrerer Richtungen bewegbar und/oder um eine oder mehrere Achsen kippbar ist. Vorzugsweise weist der Schneidkopf 71 eine oder mehrere Lasereinheiten 72 zum Ausschneiden der Werkstücke 101 auf. Alternativ oder zusätzlich kann die Schneideinrichtung 70 eine oder mehrere Wasserstrahl- und/oder Elektronenstrahleinheiten und/oder Stempel zum Ausstanzen der Werkstücke 101 aufweisen. Im Anschluss an das Zuschneiden des Metallbands B können die Werkstücke 101 und/oder Halbzeuge derselben und/oder Schrottreste durch eine Aufwickelhaspel 90 zu einem Coil C2 aufgewickelt oder auf andere Weise abtransportiert werden.

Zur Realisierung des Zuschnitts weist die Anlage 50 eine Steuereinrichtung 51 auf, welche die Steuerung der Anlage 50, insbesondere der Schneideinrichtung 70, vornimmt, vorzugsweise computerbasiert. Zu diesem Zweck kommunizieren Komponenten der Anlage 50 (zumindest die Schneideinrichtung 70 derselben) mit der Steuereinrichtung 51. Die Steuereinrichtung 51 ist eingerichtet, um das zuvor ermittelte Schnittmuster 100 zu empfangen und den Zuschnitt des Metallbands B auf der Grundlage des Schnittmusters 100 zu veranlassen. Die Daten des Schnittmusters 100 können manuell oder automatisch bezogen werden.

Es sei darauf hingewiesen, dass die Planungseinrichtung 4 alternativ auf der Seite des weiterverarbeitenden Betriebs vorgesehen sein kann, insbesondere kann die Planungseinrichtung 4 Teil der Anlage 50 oder sogar Teil der Steuereinrichtung 51 sein. Die Zuordnung der hier beschriebenen Steuereinrichtungen kann geeignet gewählt und/oder zusammengefasst werden, solange sichergestellt ist, dass das Schnittmuster 100 unter Berücksichtigung von Daten der zuzuschneidenden Werkstücke 101 und der Qualitätsinformationen des Metallbands B generiert wird.

Gemäß einem Ausführungsbeispiel werden der Planungseinrichtung 4 ein oder mehrere Datensätze von Werkstücken 101, die aus dem Metallband B auszuschneiden sind, bereitgestellt. Die Datensätze werden beispielsweise von einem Kunden der Coils C1 zur Verfügung gestellt oder auf der Grundlage von Kunden- oder Auftragsinformationen ermittelt. Wenn die Bereitstellung der Datensätze über einen geeigneten Kommunikationsweg, etwa des Internets erfolgt, kann die Schnittmustererstellung kurzfristig konfiguriert oder abgeändert werden.

Die Datensätze des einen oder der mehreren Werkstücke 101 und die Qualitätsinformationen werden genutzt, um die Lage der Werkstücke 101, d.h. deren Positionen und Ausrichtungen, auf dem Metallband B festzulegen. Es sei darauf hingewiesen, dass Werkstücke 101 unterschiedlicher Formen aus dem Metallband B ausgeschnitten werden können, auch wenn die Figur 2 der Einfachheit halber nur einen Werkstücktyp darstellt.

Die Anordnung der Werkstücke 101 wird von der oben dargelegten Planungseinrichtung 4 berechnet. Die Planungseinrichtung 4 weist hierfür zumindest einen Prozessor und einen Speicher auf. Die Berechnung der Positionen und Ausrichtungen der Werkstücke 101 bzw. deren Formen auf dem Metallband B erfolgt vorzugsweise algorithmisch, etwa durch Ausführen eines Computerprogramms von dem Prozessor. Im Anschluss an die Berechnung des Schnittmusters 100 wird das Metallband B entsprechend dem Schnittmuster 100 durch die Schneideinrichtung 70 zugeschnitten.

Wie bei der Steuereinrichtung 2 können die Qualitätskartierung 3 und/oder die Planungseinrichtung 4 und/oder die Steuereinrichtung 51 sowohl zentrale als auch dezentrale elektronische Strukturen umfassen. Diese elektronischen Einrichtungen müssen sich demnach nicht am "Ort" des Walzwerks 1 oder der Anlage 50 befinden oder Bestandteil derselben sein. Zudem können Steueraufgaben, Datenverarbeitungsschritte usw. auf verschiedene Recheneinrichtungen verteilt werden. Ferner kann die Kommunikation zwischen den Komponenten sowohl physisch über Kabel als auch drahtlos erfolgen. Die elektronischen Einrichtungen 2, 3, 4, 51 können getrennt sein, sie können aber auch teilweise oder vollständig integriert sein. Alternativ können eine oder mehrere elektronische Einrichtung Teil einer anderen sein.

Soweit anwendbar können alle Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Walzwerk
- 2: Steuereinrichtung
- 3: Elektronische Einrichtung/Qualitätskartierung
- 4: Planungseinrichtung
- 10: Walzgerüst
- 20: Sensorik

- 50: Anlage für den Zuschnitt eines Metallbands
- 51: Steuereinrichtung
- 60: Abwickelhaspel
- 70: Schneideinrichtung
- 71: Schneidkopf
- 72: Lasereinheit
- 80: Richtrolle
- 90: Aufwickelhaspel

- 100: Schnittmuster
- 101: Werkstück

- B: Bandmaterial/Metallband
- F: Förderrichtung
- C1: Coil
- C2: Coil

## Patentansprüche

1. Planungseinrichtung (4) zur Erstellung eines Schnittmusters (100), das zum Steuern einer Anlage (50) für den Zuschnitt eines Bandmaterials (B), vorzugsweise eines Metallbands, vorgesehen ist, wobei die Planungseinrichtung (4) eingerichtet ist, um
Werkstückdaten, die eine oder mehrere Formen von aus dem Bandmaterial (B) herzustellenden Werkstücken (101) kennzeichnen, zu empfangen, Qualitätsdaten, welche die qualitative Beschaffenheit eines oder mehrerer Abschnitte des Bandmaterials (B) kennzeichnen, zu empfangen,
eine Anordnung der Formen auf dem Bandmaterial (B) unter Berücksichtigung der Werkstückdaten und der Qualitätsdaten zu bestimmen und daraus ein Schnittmuster (100) zu erstellen.

2. Planungseinrichtung (4) nach Anspruch 1, **dadurch gekennzeichnet, dass** die Bestimmung der Anordnung der Formen eine Optimierung der Positionen und/oder Ausrichtungen der Formen relativ zum Bandmaterial (B) umfasst.

3. Planungseinrichtung (4) nach Anspruch 2, **dadurch gekennzeichnet, dass** die Optimierung eine Minimierung des Verschnitts und/oder eine Maximierung der Anzahl der auszuschneidenden Werkstücke (101) pro Bandeinheit umfasst.

4. Planungseinrichtung (4) nach einem der vorigen Ansprüche, **dadurch gekennzeichnet, dass** bei der Bestimmung der Anordnung Abschnitte des Bandmaterials (B), deren Qualitätsdaten auf einen oder mehrere Mängel oder Defekte hinweisen, ausgespart werden.

5. Planungseinrichtung (4) nach Anspruch 4, **dadurch gekennzeichnet, dass** die Mängel oder Defekte umfassen:
Oberflächenfehler, vorzugsweise Kratzer und/oder Dellen und/oder Fremdmaterialien und/oder Zunderreste und/oder Walzfehler und/oder abweichende Rauheit, und/oder
von einer Spezifikation abweichende Materialeigenschaften, vorzugsweise Zugfestigkeit und/oder Streckgrenze und/oder E-Modul und/oder Bruchdehnung und/oder R-Wert.

6. Planungseinrichtung (4) nach einem der vorigen Ansprüche, **dadurch gekennzeichnet, dass** die Qualitätsdaten als Funktion von Bandkoordinaten, vorzugsweise in Längsrichtung und/oder Breitenrichtung des Bandmaterials (B), empfangen oder erstellt werden.

7. Planungseinrichtung (4) nach einem der vorigen Ansprüche, **dadurch gekennzeichnet, dass** die Anordnung der Formen auf dem Bandmaterial (B) ferner unter Berücksichtigung von Prozessdaten aus dem Herstellungsprozess des Bandmaterials (B) bestimmt wird.

8. System zur Erstellung eines Schnittmusters (100), das zum Steuern einer Anlage (50) für den Zuschnitt eines Bandmaterials (B), vorzugsweise eines Metallbands, vorgesehen ist, wobei das System aufweist:
eine Sensorik (20), die zur Detektion mechanischer Eigenschaften des Bandmaterials (B) und Bereitstellung von Detektionsdaten eingerichtet ist,
eine elektronische Einrichtung (3), die eingerichtet ist, um aus den Detektionsdaten der Sensorik (20) Qualitätsdaten, welche die qualitative Beschaffenheit eines oder mehrerer Abschnitte des Bandmaterials (B) kennzeichnen, bereitzustellen, und
eine Planungseinrichtung (4) nach einem der vorigen Ansprüche.

9. System nach Anspruch 8, **dadurch gekennzeichnet, dass** die Sensorik (20) ein Kamerasystem und/oder einen oder mehrere Detektoren zur Messung des Profils und/oder der Rauheit und/oder Streckgrenze und/oder Zugfestigkeit und/oder des E-Moduls aufweist.

10. Verfahren zur Erstellung eines Schnittmusters (100), das zum Steuern einer Anlage (50) für den Zuschnitt eines Bandmaterials (B), vorzugsweise eines Metallbands, vorgesehen ist, wobei das Verfahren aufweist:
Empfangen von Werkstückdaten, die eine oder mehrere Formen von aus dem Bandmaterial (B) herzustellenden Werkstücken (101) kennzeichnen,
Empfangen von Qualitätsdaten, welche die qualitative Beschaffenheit eines oder mehrerer Abschnitte des Bandmaterials (B) kennzeichnen,
Bestimmen einer Anordnung der Formen auf dem Bandmaterial (B) unter Berücksichtigung der Werkstückdaten und der Qualitätsdaten und Erstellen eines Schnittmusters (100) daraus.

11. Verfahren nach Anspruch 10, **dadurch gekennzeichnet, dass** bei der Bestimmung der Anordnung Abschnitte des Bandmaterials (B), deren Qualitätsdaten auf einen oder mehrere Mängel oder Defekte hinweisen, ausgespart werden.

12. Verfahren nach Anspruch 10 oder 11, **dadurch gekennzeichnet, dass** die Qualitätsdaten als Funktion von Bandkoordinaten, vorzugsweise in Längsrichtung und/oder Breitenrichtung des Bandmaterials (B), empfangen oder erstellt werden.

13. Verfahren nach einem der Ansprüche 10 bis 12, **dadurch gekennzeichnet, dass** die Anordnung der Formen auf dem Bandmaterial (B) ferner unter Berücksichtigung von Prozessdaten aus dem Herstellungsprozess des Bandmaterials (B) bestimmt wird.

14. Verfahren nach einem der Ansprüche 10 bis 13, **dadurch gekennzeichnet, dass** das Verfahren ferner aufweist:
Detektieren mechanischer Eigenschaften des Bandmaterials (B) mittels einer Sensorik (20) und Bereitstellen von Detektionsdaten,
Bereitstellen der Qualitätsdaten aus den Detektionsdaten der Sensorik (20).
